Europäisches Patentamt

European Patent Office

Office européen des brevets

(19)

(11) EP 0 703 269 A1

(12) EUROPEAN PATENT APPLICATION

(43) Date of publication:
27.03.1996 Bulletin 1996/13

(51) Int Cl.6: C08K 3/34, C08J 3/22

(21) Application number: 95306594.3

(22) Date of filing: 19.09.1995

(84) Designated Contracting States:
BE DE FR GB IT

(30) Priority: 22.09.1994 JP 227886/94

(71) Applicant: SUMITOMO CHEMICAL COMPANY, LIMITED
Chuo-ku Osaka 541 (JP)

(72) Inventors:
• Ima, Seiichiro
Ichihara-shi (JP)
• Shiratani, Eisuke
Ichihara-shi (JP)

(74) Representative: Cresswell, Thomas Anthony
J.A. KEMP & CO.
14 South Square
Gray's Inn
London WC1R 5LX (GB)

(54) Process for producing polyolefin composition and process for producing composition for polyolefin film

(57)     A process for producing a polyolefin composition which comprises mixing 97-75% by weight of polyolefin particles (I) which have an average particle diameter of 50-500 μm and which contain 10% by weight or more of particles having a diameter of 100 μm or less, and from 3.0-25.0% by weight of an inorganic powder which has an average particle diameter of 1.0-40 μm and an apparent density of 0.25-0.50 g/cm³, and melt-kneading the resulting mixture to produce a masterbatch which in turn is useful for producing polyolefin films in which the inorganic powder (II) is well dispersed and which have good film properties, including appearance and scratch resistance, while retaining desirable characteristic properties inherent to polyolefin films.

EP 0 703 269 A1

## Description

The present invention relates to a process for producing a polyolefin composition, to a process for producing a composition for polyolefin film, and to a process for imparting well-balanced specific properties to polyolefin film. In more particular, it relates to a process for producing a polyolefin composition containing an inorganic fine powder in a high concentration which is used as the masterbatch of an antiblocking agent, to a process for producing a composition for polyolefin film which comprises mixing the aforesaid polyolefin composition with polyolefin as the masterbatch of an antiblocking agent, said composition for film being capable of giving polyolefin films in which the inorganic fine powder is well dispersed and which have good appearance, transparency, blocking resistance and scratch resistance, and to a process for imparting well-balanced these properties to polyolefin film.

Films comprising polyolefins have been used in a wide variety of field. For example, they have been extensively used as packaging materials of various goods, including food packaging materials.

In particular, films comprising polypropylene, which are excellent in mechanical properties, in optical properties, e.g., transparency and gloss, and further in food-hygienic properties, e.g., moisture impermeability and odorlessness, have been in wide use, their major field of application being in food packaging.

However, films comprising polyolefins, when used as such, have a problem in that they are apt to undergo so-called blocking, in which the film sheets tend to stick to each other when placed one upon another, which causes severe deterioration of operability in packaging, etc. Therefore, as a means for preventing the blocking of films comprising polyolefins, it has commonly been practiced to incorporate into the film, as a so-called blocking agent, an inorganic fine powder typically represented by silicon dioxide, such as Syloid 244 (a trade name), or further to use an antiblocking agent and a lubricant, e.g., an aliphatic acid amide, in combination.

Methods for incorporating an antiblocking agent into polyolefin hitherto used include one which comprises adding a predetermined amount of an inorganic fine power of the antiblocking agent directly to polyolefin particles obtained by polymerization, then mixing them in a mixer at a temperature lower than the melting point of the polyolefin to obtain a dispersion system, and then melt-kneading the system at a temperature higher than the melting point of the polyolefin; and one which comprises first preparing a so-called masterbatch of an antiblocking agent by melt-kneading a polyolefin composition containing the inorganic fine powder in a concentration higher than that in the ultimate system of the former method containing the predetermined amount of the inorganic powder and in a uniformly dispersed state, then mixing the masterbatch with polyolefin and melt-kneading the resulting mixture. The latter method of using a masterbatch is industrially more favorable since a masterbatch can be easily added to polyolefin.

However, although the dispersibility in polyolefin particles of the above-mentioned inorganic fine powder represented by silicon dioxide is good in a low concentration region where the content of the inorganic fine powder is not more than about 1% by weight, the dispersibility tends to be very poor as the content exceeds about 2% by weight; when the content reaches 3-4% by weight, the inorganic powder is not dispersed uniformly, and hence stable production of a polyolefin composition having a uniform content of inorganic fine powder and a uniform quality has been difficult. Furthermore, films prepared from a polyolefin composition obtained by mixing polyolefin with a polyolefin composition which contains 3% by weight or more of inorganic fine powder and which is used as the masterbatch of an antiblocking agent have been unsatisfactory in appearance, transparency and blocking resistance.

The present inventors have made extensive study to overcome the aforesaid difficulties. As the result, the inventors have found out that the above-mentioned object can be achieved by mixing polyolefin particles having an average particle diameter and a fine particle content respectively in a specified range with an inorganic fine powder having an average particle diameter and an apparent density respectively in a specified range, and melt-kneading the resulting mixture. Thus the present invention has been attained.

## SUMMARY AND OBJECT OF THE INVENTION

One object of the present invention is to provide a process for producing a polyolefin composition with a stable quality which comprises melt-kneading a polyolefin composition comprising an inorganic fine powder and polyolefin particles, the content of the inorganic fine powder in the composition being 3% by weight or more. The other objects of the present invention are to provide a process for producing a composition for polyolefin film which comprises melt-kneading a polyolefin composition containing 3% by weight or more of an inorganic fine powder to prepare a masterbatch of an antiblocking agent, mixing the masterbatch into polyolefin, and melt-kneading the resulting mixture, said composition for film being capable of giving polyolefin film having good appearance, transparency, blocking resistance and scratch resistance, and to provide a process for imparting well-balanced these properties to polyolefin film.

Thus, according to the present invention, there is provided a process for producing a polyolefin composition which comprises the steps of:

(a) mixing 97-75% by weight of polyolefin particles (I) having an average particle diameter of 50-500 μm and con-

taining 10% by weight or more of fine particles having a diameter of 100 μm or less with 3-25% by weight of an inorganic fine powder (II) having an average particle diameter of 1.0-4.0 μm and an apparent density of 0.25-0.50 g/cm³ to form a mixture and

(b) melt-kneading the mixture (said polyolefin composition being hereinafter sometimes referred to as "masterbatch composition").

Further, according to the present invention, there is provided a process for producing a composition for polyolefin film which comprises the steps of:

(c) mixing 0.1-10 parts by weight of the master-batch composition obtained by the aforesaid process with 100 parts by weight of a polyolefin (III) to form a precursor mixture and

(d) melt-kneading the precursor mixture.

Further, according to the present invention, there is provided a process for imparting well-balanced appearance, transparency, blocking resistance and scratch resistance to polyolefin film, which comprises the steps of:

(e) using the composition for polyolefin film obtained aforesaid process for the preparation of polyolefin film.

The present invention is described in detail below.

DETAILED DESCRIPTION OF THE INVENTION

One aspect of the present invention relates to a process of producing a masterbatch composition which comprises (a) mixing polyolefin particles (I) having an average particle diameter and a fine particle content respectively in a specified range with an inorganic fine powder (II) having an average particle diameter and an apparent density respectively in a specified range, in a specified proportion, and (b) melt-kneading the resulting mixture.

The polyolefin particles (I) used in the aforesaid process are particles of a polyolefin, such as polypropylene and polyethylene, which have an average particle diameter of 50-500 μm and contain 10% by weight or more of fine particles having a diameter of 100 μm or less. When the average particle diameter of the polyolefin particles is more than 500 μm, the dispersion of the inorganic fine powder in the composition is poor even when the procedure of the process of the present invention is followed, and the object of the present invention cannot be achieved. Polyolefin particles having an average particle diameter of less than 50 μm may cause troubles due to scattering of fine powders and present the risk of dust explosion, and hence are unsuitable from the industrial viewpoint. The polyolefin particles preferably have an average particle diameter of 70 μm to 300 μm. The average particle diameter of polyolefin particles was herein determined by measuring the particle diameter distribution with an apparatus for measuring particle size distribution by laser diffraction method.

The polyolefin particles (I) used in the present invention contain fine particles having a diameter of 100 μm or less in a proportion of 10% by weight or more. When the proportion of the aforesaid fine particles is less than 10% by weight, the inorganic fine powder is poorly dispersed even when the procedure of the process of the present invention is followed, and the object of the present invention cannot be achieved. The proportion of the fine particles is preferably 15% by weight or more.

The polyolefin particles (I) are preferably those of polyolefins containing propylene monomer units, particularly preferred being propylene homopolymers, propylene-ethylene random copolymers, propylene-α-olefin random copolymers and propyleneethylene-α-olefin random terpolymers. Preferred α-olefins in the propylene-α-olefin random copolymers and propylene-ethylene-α-olefin random terpolymers are α-olefins having 4-10 carbon atoms, particularly preferred being butene-1. Ethylene content in the copolymers and terpolymers preferably ranges up to 10% by weight, and α-olefins contents in the copolymers and terpolymers preferably ranges up to 35% by weight, more preferably from 15 to 35% by weight.

The inorganic fine powder (II) used in the present invention has an average particle diameter of 1.0-4.0 μm, preferably 1.5-4.0 μm, and an apparent density of 0.25-0.50 g/cm³, preferably 0.25-0.45 g/cm³.

When, in a masterbatch composition comprising polyolefin particles (I) and an inorganic fine powder (II), the average particle diameter of the inorganic fine powder (II) is less than 1.0 μm, the film obtained from the composition for polyolefin film prepared by using the masterbatch composition (the film being hereinafter sometimes abbreviated as "said film") is unsatisfactory in blocking resistance. When the average diameter is more than 4.0 μm, on the other hand, the appearance and transparency of said film tend to be poor. When the apparent density of the inorganic fine powder (II) is less than 0.25 g/cm³, the appearance of said film tends to be poor; whereas when the apparent density is more than 0.50 g/cm³, the scratch resistance of said film tends to be poor.

The inorganic fine powder (II) may be, for example, fine powder of silicon dioxide, aluminum silicate, calcium carbonate and magnesium oxide. Preferably used is silicon dioxide having an average particle diameter of 1.5-4.0 $\mu$m and an apparent density of 0.25-0.45 g/cm$^3$.

The amount of the inorganic fine powder (II) is 3-25% by weight based on the total amount of the polyolefin particles (I) and the inorganic fine powder (II). When the amount of the inorganic fine powder (II) in the masterbatch composition is less than 3% by weight, a large amount of the composition must be added in producing a composition for polyolefin film according to the other aspect of the present invention described later in order that the film obtained from the composition thus produced may exhibit a fully satisfactory blocking resistance; this is disadvantageous in point of cost. When the amount of the inorganic fine powder (II) is more than 25% by wight, the productivity of the masterbatch composition is greatly deteriorated. From the viewpoints of the dispersibility of the inorganic fine powder (II) in the masterbatch composition and the productivity of the masterbatch composition, the amount of the inorganic fine powder (II) is preferably 4-20% by weight based on the total amount of the polyolefin particles (I) and the inorganic fine powder (II).

Inorganic fine powder (II) preferably used is silicon dioxide powder having an average particle diameter of 1.5-4.0 $\mu$m and an apparent density of 0.25-0.45 g/cm$^3$, the amount thereof to be added being preferably 4-20% by weight based on the total amount of the polyolefin particles (I) and the inorganic fine powder (II).

The mixing of the polyolefin particles (I) and the inorganic fine powder (II) may be effected by conventional methods using a mixer, e.g., tumbler, Super-mixer, Henschel mixer, screw blender, ribbon blender, and the like. Particularly preferred methods are those by the use of a mixer having a rotor from the viewpoint of dispersibility of the inorganic fine powder (II) in the composition. In using a mixer having a rotor (for example, Super-mixer and Henschel mixer), the peripheral speed at the rotor tip is preferably at least 5 m/sec to attain a good dispersion of the inorganic fine powder (II) in the composition.

The method of melt-kneading is not particularly limited so long as melt-kneading is conducted at a temperature not lower than the melting point of the polyolefin particles by the use of, for example, a melt-extruder, a Banbury mixer or the like but, from the viewpoint of productivity of the masterbatch composition, the use of melt-extruder is preferred, and the use of a multi-screw extruder provided with two or more screws being particularly preferred to attain stable production.

The process for producing the masterbatch composition according to the present invention makes it possible to obtain a polyolefin composition which contains as inorganic fine powder in a high concentration and in a good state of dispersion. The masterbatch composition of the present invention, if necessary and desired, may be incorporated with at least one kind of additive selected from conventionally used antioxidants, neutralizing agents, lubricants, antistatic agents, etc.

In the next place, the process for producing a composition for polyolefin film according to the other aspect of the present invention is described below.

The process for producing a composition for polyolefin film of the present invention comprises the steps of (c) mixing 0.1-10 parts by weight of the masterbatch composition obtained by the process described above with 100 parts by weight of polyolefin particles (III) to form a precursor mixture and (d) melt-kneading the precursor mixture.

The polyolefin particles (III) used are powders, pellets or a mixture of powders and pellets of polyolefins which contain as monomer units, for example, propylene or ethylene. Particularly preferred are propylene homopolymers, propylene-ethylene random copolymers, propylene-$\alpha$-olefin random copolymers and propylene-ethylene-$\alpha$-olefin random terpolymers. The $\alpha$-olefins in the propylene-$\alpha$-olefin random copolymers and propylene-ethylene-$\alpha$-olefin random terpolymers are preferably those having 4-10 carbon atoms, e.g., butene-1, pentene-1, hexene-1 and 4-methylpentene-1, among which butene-1 is particularly preferred. Ethylene content in the copolymers and terpolymers preferably ranges up to 10% by weight, and $\alpha$-olefins contents in the copolymers and terpolymers preferably ranges up to 35% by weight, more preferably from 15 to 35% by weight.

In the case where the polyolefin (III) is polypropylene, the process of the present invention can favorably be applied even to a powdery polypropylene which is obtained by a high activity solid catalyst comprising, for example, titanium, magnesium, a halogen and an electron donor as essential components and which has an average particle diameter of 500-1300 $\mu$m, preferably 600-1200 $\mu$m and contains not more than 10% by weight of fine particles having a diameter of 300 $\mu$m or less. Previous methods give a poor dispersion of inorganic fine powder in such polypropylene powder.

The content of the inorganic fine powder in the composition for polyolefin film is preferably 0.05-1% by weight, more preferably 0.1-0.5% by weight, from the viewpoints of the blocking resistance of the film obtained and the dispersibility of the inorganic fine powder in the composition. The mixing proportion of the masterbatch composition to the polyolefin (III) is 0.1-10 parts by weight, preferably 0.3-5 parts by weight of the composition relative to 100 parts by weight of the polyolefin (III). When the above-mentioned proportion of the masterbatch composition is less than 0.1 part by weight, the content of the inorganic fine powder in the composition for polyolefin film cannot fall within the above-mentioned range, and the film obtained from the composition is unsatisfactory in blocking resistance. On the other hand, a proportion of more than 10 parts by weight is disadvantageous in cost.

The method for mixing the masterbatch composition with the polyolefin (III) is not particularly limited so long as it ensures uniform dispersion of the masterbatch composition in the polyolefin. It may be a conventional method by the use of a mixer as a tumbler, Super-mixer, Henschel mixer, screw blender and ribbon blender. Particularly preferred methods are those by the use of a mixer having a rotor. In using a mixer having a rotor (for example, Super-mixer and Henschel mixer), the peripheral speed at the rotor tip is preferably at least 5 m/sec.

The composition for polyolefin film of the present invention, if necessary and desired, may be incorporated with conventional additives, e.g., antioxidants, neutralizing agents, lubricants, and antistatic agents.

The composition for polyolefin film obtained by the process described above, particularly compositions for polypropylene film, can favorably be used for producing polyolefin films by processes conventionally used in the industry, for example, melt-extrusion processes as T-die film extrusion and tubular film extrusion.

The present invention makes it possible to produce stably a high concentration masterbatch of inorganic fine powder which can give films excellent in the balance of transparency, blocking resistance and scratch resistance while retaining good film appearance inherent to polyolefin film, particularly to polypropylene film, by using polyolefin particles and by resorting neither to special mixing methods nor to joint use of such a specific dispersant as an aliphatic acid salt.

EXAMPLES

The present invention is described in detail below with reference to Examples, but the invention is in no way limited thereby.

The test items in the Detailed Description of the Invention and Examples were examined by the following methods.

(1) Melt flow rate (MFR)
The MFR was determined according to JIS K7210, condition 14.

(2) Ethylene content and butene-1 content
Ethylene content: This was determined by IR spectrometry according to the method described in Handbook of Polymer Analysis (published by Asakura Shoten, 1985), p. 256, paragraph (i) random copolymer.
Butene-1 content: This was determined by IR spectrometry from the following equation.
Butene-1 content (wt.%) = 1.208K' 767

(3) Average particle diameter of polyolefin particles
This was determined from the weight distribution of particle size obtained with an apparatus for measuring particle size distribution by laser diffraction method (HELOS-E/LA, mfd. by JEOL Ltd.) and expressed in terms of median diameter.

(4) Average particle diameter of inorganic fine powder
This was determined from the weight distribution of particle size measured with Coulter Counter multi-sizer and expressed in terms of median diameter.

(5) Apparent density of inorganic fine powder
This was determined according to the method described in JIS K6220, paragraph 6.8.
Film properties:

(6) Appearance
Film samples were visually inspected to observe fish eyes (FE) having a diameter of 200 $\mu$m or more. Samples wherein the number of FE is less than 10 per 1000 $cm^2$ of film area were rated as "good" and those wherein the number is more than 20 were rated as "poor". Samples wherein the number of FE is in the range of about 10-20 were inspected for small fish eyes having a diameter of about 100 $\mu$m, and the samples judged usable in practice were rated as "nearly good".

(7) Haze
This was determined according to JIS K7105.

(8) Blocking resistance
Two sheets of a film sample 225 mm by 50 mm in dimension were placed one upon the other, and a region of 100 mm by 50 mm of the sheets were conditioned under a load of 40 $g/cm^2$ at 60°C for 3 hours. Then the conditioned sheets were allowed to stand in an atmosphere of 23°C and 50% humidity for at least 30 minutes. Thereafter the sheets were subjected to a peeling test by use of a blocking tester (mfd. by Shimadzu Corp.) at a loading rate of 20 g/min to determine the force necessary for peeling apart the sample sheets. A smaller value of the force means a better blocking resistance.

(9) Scratch resistance

Film sheets allowed to stand at 23°C for 1 day after film preparation were used as the sample. Two film sheets were placed one upon the other. One film of the sheets was fixed onto a shaker through a soft material which would not injure the film such that the film might develop neither slack nor wrinkles, the film being attached onto the soft material between the film and the shaker (this film sheet being referred to as film A). The other film sheet (film B) was fixed to a metal pipe (fixed bar) such that two longitudinal ends of the film B might be fixed to the same metal pipe and the middle part of the film B might be in contact with the upper side of the film A by a silicone rubber-adhered bar therearound, the silicone rubber-adhered bar being onto the opposite side of the middle part of the film B in contact with the upper side of the film A, and the two film sheets were made to rub each other at an amplitude of 40 mm and a shaking frequency of 120/min for 1 minute. The hazes of film A before and after the rubbing were determined according to JIS K7105, and the difference between before and after, which was referred to as Δ haze, was used as the measure of the scratch resistance of the film. A smaller value of Δ haze means a better scratch resistance.

$$\Delta \text{ Haze} = (\text{haze after rubbing}) - (\text{haze before rubbing})$$

Example 1

To 100 parts by weight of a mixture consisting of 95 parts by weight of a propylene-ethylene copolymer powder (abbreviated as PP-1, ethylene content 4.5% by weight, melt flow rate 8.0 g/10 min.) having an average particle diameter of 180 μm and containing 32% by weight of fine particles 100 μm or less in diameter, used as the polyolefin particles (I), and 5.0 parts by weight of Syloid 55 (silicon dioxide powder, mfd. by Fuji Davidson Ltd., average particle diameter 2.7 μm, apparent density 0.33 g/cm$^3$), used as the inorganic fine powder (II), was added 0.15 part by weight of Irganox 1010 (mfd. by Ciba-Geigy Ltd.), the resulting mixture was blended in a 20-ℓ Super-mixer (peripheral speed at the blade (rotor) tip: 8 m/sec) and then melt-extruded through a twin screw extruder of 20 mm bore diameter (type 2D25-S, mfd. by Toyo Seiki Seisaku-sho Ltd.) at 220°C to obtain pellets (i.e., masterbatch). Then, 2.0 parts by weight of the pellets were mixed with 100 parts of Sumitomo Noblen FM321 (a propyleneethylene copolymer, ethylene content 3.7% by weight, melt flow rate 7.2 g/10 m; containing as additives 0.08 part by weight of erucic amide: a lubricant, and 0.1 part by weight of Syloid 244: an inorganic fine powder), used as the polyolefin (III). The resulting mixture was melt-extruded through a T die extruder of 50 mm bore diameter at a die temperature of 250°C, and cooled by a cooling roll having a surface temperature of 30°C to obtain a monolayer film 30 μm in thickness. The properties of the film thus obtained are shown in Table 2. The film had good appearance, haze, blocking resistance and scratch resistance.

The properties of film separately prepared from Sumitomo Noblen FM321 alone were as follows.

| | |
|---|---|
| Appearance | Good |
| Haze | 0.9% |
| Blocking resistance | 90 g/100 cm$^2$ |
| Scratch resistance | 1.2% |

Example 2

The same procedure as in Example 1 was repeated except that a propylene-ethylene copolymer powder (ethylene content 3.2% by weight, melt flow rate 8.2 g/10 min) having an average particle diameter of 250 μm and containing 16% by weight of fine particles 100 μm or less in diameter was used as the polyolefin particles (I). The properties of the film obtained are shown in Table 2.

Example 3

The same procedure as in Example 1 was repeated except that undersize particles (average particle diameter: 75 μm, the content of fine particles 100 μm or less in diameter: 58% by weight) obtained by screening the copolymer PP-1 used in Example 1 through a JIS standard sieve having a sieve opening of 350 μm was used as the polyolefin particles (I). The properties of the film obtained are shown in Table 2.

Comparative Example 1

The same procedure as in Example 1 was repeated except that a powdery propylene-ethylene copolymer (ethylene content 3.7% by weight, melt flow rate 5.7 g/10 min) having an average particle diameter of 330 μm and containing 2% by weight of fine particles 100 μm or less in diameter (the content of fine particles 300 μm or less in diameter being 35% by weigh) was used as the polyolefin particles (I). The properties of the film obtained are shown in Table 2. The dispersion of inorganic fine powder in the film was poor and resultantly the film developed many FEs and had a poor appearance.

Example 4

A mixture consisting of 90% by weight of polyolefin particles (I) and 10% by weight of inorganic fine powder was prepared by using the copolymer PP-1 used in Example 1 as the polyolefin particles (I) and Syloid 55 (silicon dioxide powder, mfd. by Fuji Davidson Ltd.) as the inorganic fine powder. To 100 parts by weight of the mixture was added 0.15 part by weight of Irganox 1010 (mfd. by Ciba-Geigy Ltd.) and blended in a 500-ℓ Super-mixer (peripheral speed at blade tip 25 m/sec). The resulting blend was melt-extruded through a twin screw extruder (PCM 83, mfd. by Ikegai Corp.) at 230°C to obtain pellets of a master-batch composition. To 100 parts by weight of a mixture consisting of 2.0 parts by weight of the pellets and 100 parts by weight of a powdery propylene-ethylenebutene-1 terpolymer (ethylene content 1.0% by weight, butene-1 content 9.5% by weight, melt flow rate 6.5 g/10 min) as polyolefin (III) were added 0.05 part by weight of calcium stearate, 0.2 part by weight of Irganox 1010 (mfd. by Ciba-Geigy Ltd.) and 0.08 part by weight of erucic amide, and blended in a 20-ℓ Super-mixer (peripheral speed at blade tip 8 m/sec). The resulting blend was melt-extruded through a 40 mm single screw granulator at 220°C to obtain pellets. By using the pellets, film was prepared in the same manner as in Example 1. The properties of the film obtained are shown in Table 3.

Example 5

Pellets of a masterbatch composition were prepared in the same manner as in Example 1 by using the same polyolefin particles (I) and the same inorganic fine powder (II) as used in Example 1 but changing the proportion of the inorganic fine powder to 20.0% by weight. Then 0.5 part by weight of the pellets were mixed with 100 parts by weight of Sumitomo Noblen FM321, and film was prepared from the resulting mixture in the same manner as in Example 1. The properties of the film obtained are shown in Table 3.

Example 6

Pellets of a masterbatch composition were prepared in the same manner as in Example 1 except that the inorganic fine powder (II) used was changed to Syloid 57 (silicon dioxide powder, mfd. by Fuji Davidson Ltd.) and the mixing proportion thereof was changed to 10.0% by weight. Then 1.0 part by weight of the pellets were mixed with 99.0 parts by weight of Sumitomo Noblen FM321, and film was prepared from the resulting mixture in the same manner as in Example 1. The properties of the film obtained are shown in Table 3.

Example 7

The same procedure as in Example 6 was repeated except that Sylophobic 507 (surface-treated type silicon dioxide powder, mfd. by Fuji Davidson Ltd.) was used as the inorganic fine powder (II) in place of Syloid 57. The properties of the film thus obtained are shown in Table 3.

Example 8

The same procedure as in Example 1 was repeated, using the same polyolefin particles and the same inorganic fine powder as used in Example 1, except that the extruder was changed to a 40 mm single screw extruder (manufactured by Tanabe Plastic K.K.). The properties of the film thus obtained are shown in Table 3.

Comparative Examples 2 to 5

The same procedure as in Example 1 was repeated, using the copolymer PP-1 used in Example 1 as polyolefin particles (I), except that the kind and the mixing proportion (% by weight) of the inorganic fine powder (II) were changed as shown in Table 1. The properties of the film thus obtained are shown in Table 3.

Table 1

| Comparative Example No. | Inorganic fine powder | Mixing proportion |
|---|---|---|
| 2 | Syloid 244 (silicon dioxide powder, mfd. by Fuji Davidson Ltd.) | 4.0 |
| 3 | Silicon AMT 08 (aluminum silicate powder, mfd. by Mizusawa Industrial Chemicals, Ltd.) | 10.0 |
| 4 | Syloid 161 (silicon dioxide powder, mfd. by Fuji Davidson Ltd.) | 10.0 |
| 5 | Silicon AMT 20 (aluminum silicate powder, mfd. by Mizusawa Industrial Chemicals, Ltd.) | 10.0 |

As revealed by Table 3, when either the average particle diameter or the apparent density of the inorganic fine powder (II) is outside the scope specified in the present invention, the obtained film is poor in appearance or in other film properties.

Comparative Example 6

Melt-kneading for obtaining a masterbatch composition was tried by following the same procedure as in Example 1 except that the mixing proportion of Syloid 55 (silicon dioxide powder, mfd. by Fuji Davidson Ltd.) of the inorganic fine powder (II) was changed to 30.0% by weight. As the result, the blended mixture could not be extruded through the extruder and failed to yield pellets of a masterbatch composition.

Example 9

A composition for polyolefin film was prepared and the properties of film obtained therefrom were evaluated in the same manner as in Example 4 except that the amount of the masterbatch composition (the same as used in Example 4) was changed to 3.5 parts by weight and 100 parts by weight of propyleneethylene-butene-1 terpolymer powder (ethylene content 1.2% by weight, butene-1 content 10.2% by weight, average particle diameter 850 $\mu$m, content of fine particles 300 $\mu$m or less in diameter 1.6% by weight) was used as the polyolefin (III).

Comparative Example 7

A mixture of 100 parts by weight of a powder propylene-ethylene-butene-1 terpolymer (ethylene content 1.2% by weight, butene-1 content 10.2% by weight, average particle diameter 850 $\mu$m, content of fine particles 300 $\mu$m or less in diameter 1.6% by weight), 0.35 part by weight of Syloid 55 (silicon dioxide powder, mfd. by Fuji Davidson Ltd.), 0.05 part by weight of calcium stearate, 0.2 part by weight of Irganox 1010 and 0.08 part by weight of erucic amide were blended in a 20-$\ell$ Super-mixer (peripheral speed at blade tip 8 m/sec) and then melt-extruded through a single screw granulator of 40 mm bore diameter at 220°C to obtain pellets. Film was prepared by using the pellets thus obtained in the same manner as in Example 1 and its properties were evaluated.

Table 2

| Example No. | Masterbatch composition | | | | |
|---|---|---|---|---|---|
| | Polyolefin particle (I) | | Inorganic fine powder (II) | | |
| | Average particle diameter ($\mu$m) | Fine particle content ($\leq$ 100 $\mu$m) (wt%) | Average particle diameter ($\mu$m) | Apparent density (g/cm$^3$) | Mixing proportion (wt.%) |
| Example 1 | 180 | 32 | 2.7 | 0.33 | 5.0 |
| Example 2 | 250 | 16 | 2.7 | 0.33 | 5.0 |
| Example 3 | 75 | 58 | 2.7 | 0.33 | 5.0 |
| Comparative Example 1 | 330 | 2 | 2.7 | 0.33 | 5.0 |

Table 2 (cont'd)

| Film properties | | | | Inorganic fine powder content in composition for polyolefin film (wt.%) |
| Appearance | Haze (%) | Blocking resistance (g/100 cm$^2$) | Scratch resistance ($\Delta$ Haze) (%) | |
|---|---|---|---|---|
| Good | 1.5 | 25 | 2.5 | 0.1 |
| Good | 1.8 | 21 | 2.4 | 0.1 |
| Good | 1.7 | 22 | 2.0 | 0.1 |
| Poor | 1.6 | 27 | 2.5 | 0.1 |

Table 3

| Example No. | Masterbatch composition | | | | |
|---|---|---|---|---|---|
| | Polyolefin particle (I) | | Inorganic fine powder (II) | | |
| | Average particle diameter (μm) | Fine particle content (≤ 100 μm) (wt%) | Average particle diameter (μm) | Apparent density (g/cm$^3$) | Mixing proportion (wt.%) |
| Example 4 | 180 | 32 | 2.7 | 0.33 | 10.0 |
| Example 5 | 180 | 32 | 2.7 | 0.33 | 20.0 |
| Example 6 | 180 | 32 | 1.9 | 0.28 | 10.0 |
| Example 7 | 180 | 32 | 1.9 | 0.48 | 10.0 |
| Example 8 | 180 | 32 | 2.7 | 0.33 | 5.0 |
| Comparative Example 2 | 180 | 32 | 1.8 | 0.13 | 4.0 |
| Comparative Example 3 | 180 | 32 | 0.8 | 0.40 | 10.0 |
| Comparative Example 4 | 180 | 32 | 4.5 | 0.29 | 10.0 |
| Comparative Example 5 | 180 | 32 | 2.0 | 0.61 | 10.0 |
| Comparative Example 6 | 180 | 32 | 2.7 | 0.33 | 30.0 |
| Example 9 | 180 | 32 | 2.7 | 0.33 | 10.0 |
| Comparative Example 7 | | | | | |

## Table 3 (cont'd)

| | Film properties | | | Inorganic fine powder content in composition for polyolefin film (wt.%) |
| Appearance | Haze (%) | Blocking resistance (g/100 cm$^2$) | Scratch resistance (Δ Haze) (%) | |
|---|---|---|---|---|
| Good | 1.7 | 14 | 1.5 | 0.2 |
| Good | 1.7 | 22 | 2.6 | 0.1 |
| Good | 1.8 | 27 | 1.5 | 0.1 |
| Good | 1.5 | 45 | 4.5 | 0.1 |
| Nearly good | 1.8 | 20 | 2.1 | 0.1 |
| Poor | 2.1 | 17 | 1.2 | 0.08 |
| Good | 1.2 | 86 | 3.0 | 0.2 |
| Poor | 2.0 | 19 | 0.5 | 0.2 |
| Good | 1.3 | 83 | 19 | 0.2 |
| - | - | - | - | - |
| Good | 3.7 | *) | 1.6 | 0.35 |
| Nearly good | 2.7 | 21 | 2.4 | 0.35 |

Note: *) Below measurable lower limit

EP 0 703 269 A1

**Claims**

1.  A process for producing a polyolefin composition, which process comprises the steps of:

    (a) mixing 97-75% by weight of polyolefin particles (I) which have an average particle diameter of 50-500 μm and which contain 10% by weight or more of particles having a diameter of 100 μm or less, and 3-25% by weight of an inorganic powder (II) which has an average particle diameter of 1.0-4.0 μm and an apparent density of 0.25-0.50 g/cm$^3$, to form a mixture, and

    (b) melt-kneading the said mixture.

2.  A process according to claim 1, wherein the polyolefin particles (I) have an average particle diameter of 70-300 μm and contain 15% by weight or more of particles having a diameter of 100 μm or less.

3.  A process according to claim 1 or 2, wherein the polyolefin particles (I) are polypropylene particles.

4.  A process according to any one of the preceding claims, wherein the inorganic powder (II) has an average particle diameter of 1.5-4.0 μm and an apparent density of 0.25-0.45 g/cm$^3$.

5.  A process according to any one of the preceding claims, wherein 96-80% by weight of the polyolefin particles (I) and 4-20% by weight of the inorganic powder (II) are used.

6.  A process according to any one of the preceding claims, wherein the inorganic powder (II) is silicon dioxide.

7.  A process according to any one of the preceding claims, which further comprises

    (c) mixing 0.1-10 parts by weight of the polyolefin composition with 100 parts by weight of polyolefin particles (III) to form a precursor mixture, and

    (d) melt-kneading the said precursor mixture to form a polyolefin composition.

8.  A process according to claim 7, wherein the polyolefin (III) is a propylene homopolymer.

9.  A process according to claim 7, wherein the polyolefin (III) is a copolymer of propylene and at least one $C_4$-$C_{10}$ α-olefin.

10. A process according to claim 7, wherein the polyolefin (III) is a propylene-ethylene random copolymer.

11. A process according to claim 7, wherein the polyolefin (III) is a propylene-ethylene-α-olefin random terpolymer, said α-olefin having 4 to 10 carbon atoms.

12. A process according to any one of claims 7 to 11, wherein the content of the inorganic powder (II) in the said precursor mixture is 0.05-1% by weight.

13. A process according to any one of claims 7 to 12 wherein the polyolefin (III) has an average particle diameter of 500-1300 μm and contains 10% by weight or less of particles having a diameter of 300 μm or less.

14. A process according to any one of claims 7 to 13, which further comprises
    (e) converting the polyolefin composition into a polyolefin film.

EP 0 703 269 A1

**European Patent Office**

**EUROPEAN SEARCH REPORT**

Application Number

EP 95 30 6594

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DATABASE WPI<br>Section Ch, Week 7915<br>Derwent Publications Ltd., London, GB;<br>Class A17, AN 79-28662b<br>& JP-A-54 029 352 (TORAY INDS) , 5 March 1979<br>* abstract * | 1,7 | C08K3/34<br>C08J3/22 |
| A | CA-A-1 011 009 (CELANESE CANADA)<br>* page 17, line 11 - page 19, line 27; claims 1-3 * | 1,7 | |
| A | US-A-4 455 344 (K. MATSUYAMA ET AL)<br>* claims 1-5 * | 1,7 | |
| | | | TECHNICAL FIELDS SEARCHED (Int.Cl.6)<br><br>C08K<br>C08J |

The present search report has been drawn up for all claims

| Place of search | Date of completion of the search | Examiner |
|---|---|---|
| THE HAGUE | 18 January 1996 | Goovaerts, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14